# EUROPEAN PATENT SPECIFICATION

(11) **EP 0 803 179 B1**
(45) Date of publication and mention of the grant of the patent: **06.12.2000**
(21) Application number: 96928725.9
(22) Date of filing: 02.09.1996
(51) Int. Cl.: A01D 34/68, A01D 34/82

(54) **WALKING-TYPE LAWN MOWER WITH BATTERY SUPPORT STRUCTURE**
SELBSTANGETRIEBENE RASENMÄHER MIT BATTERIEHALTUNG
TONDEUSE A GAZON POUSSEE AVEC STRUCTURE DE SUPPORT DE BATTERIE

(30) Priority: 01.09.1995 JP 22527195
(43) Date of publication of application: 29.10.1997
(73) Proprietor: HONDA GIKEN KOGYO KABUSHIKI KAISHA, Minato-ku, Tokyo 107 (JP)
(72) Inventor: SATOU, Kazunobu c/o K.K. Honda Gijutsu Kenkyusho, Wako-shi, Saitama-ken 351-01 (JP); VOUGIER, Dominique, F-91700 Villiers-sur-Orge (FR)
(74) Representative: Cheyne, John Robert Alexander Mackenzie
(86) International application number: JP9602466
(87) International publication number: WO9708936

(56) References cited:
- JP-A- 4 229 515
- JP-U- 1 130 616
- US-A- 4 044 532
- US-A- 4 930 300

## Description

### SPECIFICATION

### FIELD OF THE INVENTION

The present invention relates to a walking-type lawn mower comprising a battery supporting device, a cutter driving prime mover mounted on a cutter housing and a grass collecting section detachably mounted to a rear deck of the cutter housing to cover a mowed grass releasing port opened in said rear deck, wherein said battery supporting device comprises a battery mounting face.

### BACKGROUND ART

In the above walking-type lawn mower, it is a conventionally well-known battery mounting measure to mount a battery for a power source for an electric equipment such as a starter motor for the cutter driving prime mover to the steering handle post through a bracket.

However, the known battery mounting measure suffers from the following problems:
(1) The weight of the battery itself is relatively large and for this reason, an influence may be exerted to the balance of weight of the entire lawn mower depending upon the mounted portion thereof to rise the gravity center of the lawn mower itself, but also to make the mowing of lawn difficult, in some cases.
(2) A battery box itself and a wire harness connected to the battery box are exposed to the outside to degrade the appearance, but also it is necessary to specially provide dust-proof and water-proof means, thereby making the maintenance of the battery difficult.
(3) A member such as a bracket is required for mounting the battery, resulting in an increased number of parts and an increased cost.
(4) The battery occupies a small mounting space in the lawn mower and as a result, the degree of freedom in the layout and mounting of other accessories is decreased.

A walking-type lawn mower according to the preamble of claim 1 is known from US-A-4 930 300.

### DISCLOSURE OF THE INVENTION

The present invention has been accomplished with such circumstances in view, and it is an object of the present invention to provide a battery supporting device in a new walking-type lawn mower, wherein all of the above problems can be solved.

To achieve the above object, according to the present invention, the battery mounting face is formed on the rear deck, and the battery supporting device further comprises a battery box which is detachably mounted to the battery mounting face, the battery box having a battery accomodated therein by a fixture and being covered by the grass collecting section.

With the mower of the present invention, the battery is mounted to the rear deck of the cutter housing covered with the grass collecting section such as a grass bag, a rear discharge cover and the like. Therefore, the battery can be disposed in a dead space in the grass collecting section into which the mowed grass is hardly collected. Thus, it is possible to increase the degree of freedom in the layout and mounting of other accessories and moreover to substantially enhance the external appearance.

In addition, by an arrangement that the battery is accomodated in the battery box, a good sealability to the mowed grass is provided, notwithstanding that the battery is disposed in the grass collecting section. By removing the grass collecting section from the rear deck surface, the battery mounting portion can be exposed, over its entire zone, to the outside, thereby enhancing the maintenance of the battery.

Further, a conventional mounting bracket is not required. This leads to a reduced number of parts and can contribute to a reduction in total cost.

Yet further, the battery having a relatively large weight is mounted at a relatively low position on the cutter housing and hence, it is possible to lower the gravity center of the entire lawn mower to enhance the working stability thereof.

To achieve the above object, according to a preferred second aspect and feature of the present invention, in addition to the features of the main claim, the battery mounting face is formed on the rear deck laterally in parallel to the mowed-grass releasing port.

With the second feature, in addition to the effect achieved by the features of the main claim, even if the battery mounting face is formed on the rear deck, any interference is not exerted to the releasing of the mowed grass from the mowed-grass releasing port.

To achieve the above object, according to a preferred third aspect and feature of the present invention, in addition to the features of the main claim, the fixture is comprised of a locking member inserted in a mounting bore provided in the battery mounting face, and an elastomeric fastening member releasably locked on the locking member astride the battery box.

With the third feature, in addition to the effect in the features of the main claim, the fixture for mounting the battery to the battery mounting face is comprised of the locking member and the elastomeric fastening member, and hence, it is possible to provide the battery supporting device with a reduced number of parts at a low cost.

To achieve the above object, according to a preferred fourth aspect and feature of the present invention, in addition to the features of the main claim, an insertion bore is opened in the rear deck and covered along with the mounting bore by the battery box, and wire harnesses connected to the battery are guided through the insertion bore to the inside of the cutter housing.

With the fourth feature, in addition to the effect in the features of the main claim, the wire harness connecting the battery with an electric equipment such as a starter motor can be accommodated within the battery box, and cannot be exposed to the outside, even if the grass collecting section is removed. Thus, it is possible to further facilitate the maintenance of the battery and moreover, to protect the wire harness.

To achieve the above object, according to a preferred fifth aspect and feature of the present invention, in addition to the effect in the features of the main claim, the battery is disposed on rear wheels which are driving wheels.

With the fifth feature, since the battery having a relatively large weight is disposed on the rear wheels which are driving wheels, the driving force for the lawn mower itself can be increased.

### BRIEF DESCRIPTION OF THE DRAWINGS

Fig. 1 is a side view of a walking-type lawn mower including a device according to the present invention;
Fig.2 is a plan view of the lawn mower;
Fig.3 is an enlarged partially sectional view taken along a line 3-3 in Fig.2;
Fig.4 is an exploded perspective view of a battery supporting section; and
Fig.5 is a side view of another example of application of a lawn mower including a device according to the present invention.

### BEST MODE FOR CARRYING OUT THE PRESENT INVENTION

The mode for carrying out the present invention will now be described by an embodiment of the present invention shown in the accompanying drawings.

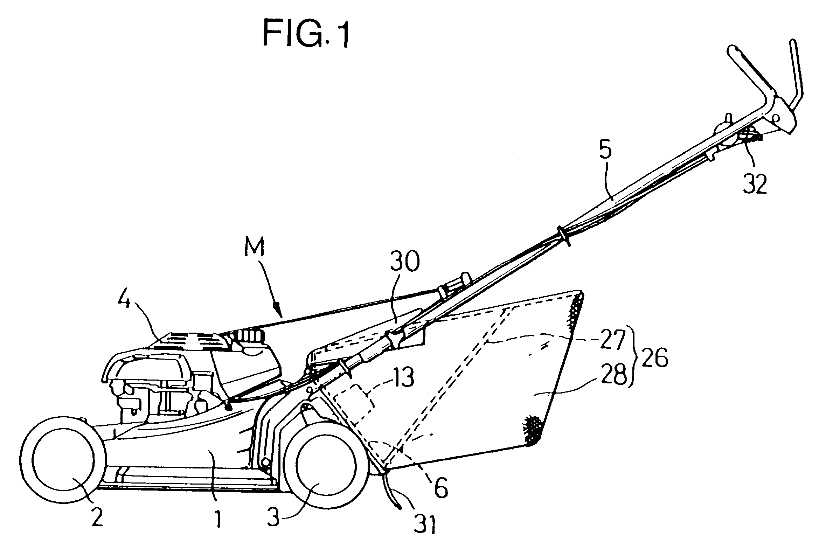

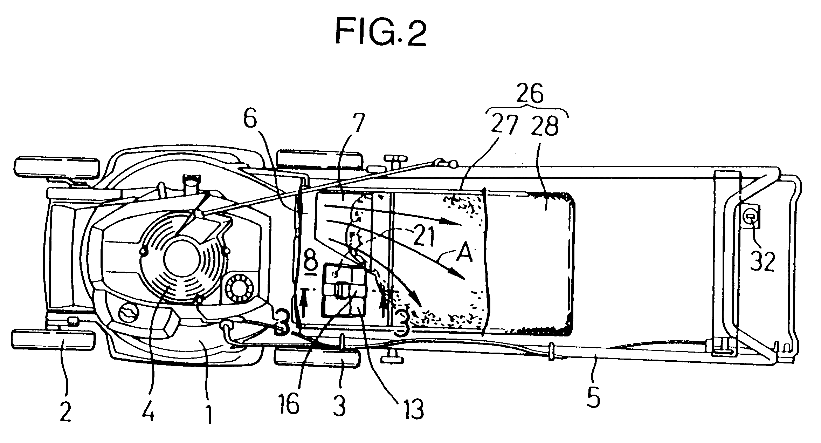

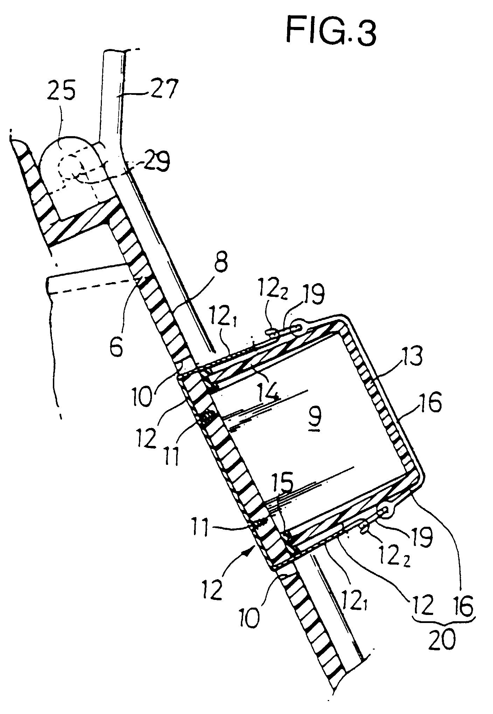

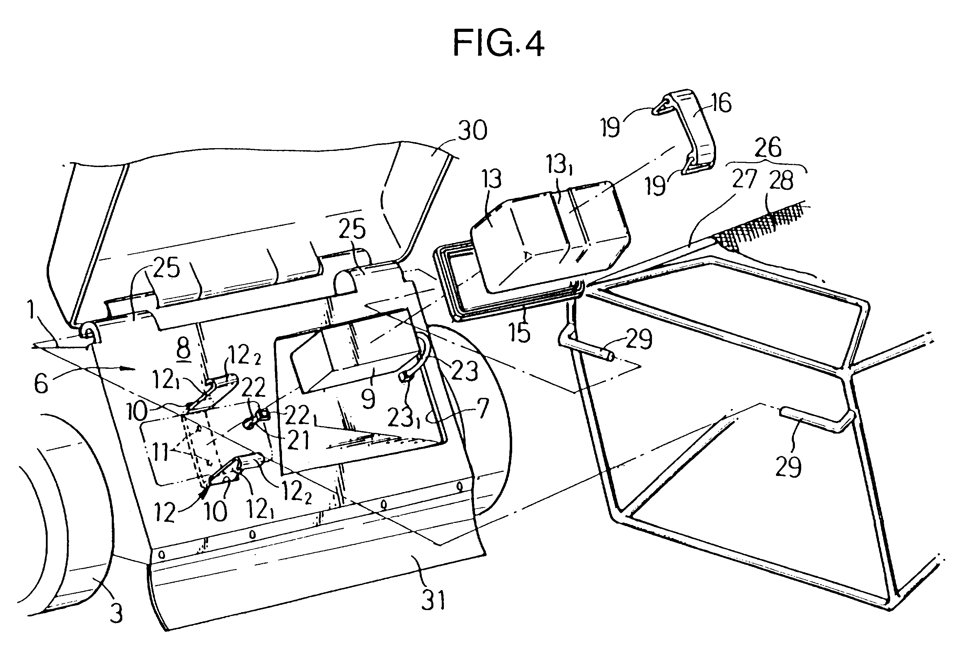

Fig.1 is a side view of a walking-type lawn mower including a device according to the present invention; Fig.2 is a plan view of the lawn mower; Fig.3 is an enlarged partially sectional view taken along a line 3-3 in Fig.2; and Fig.4 is an exploded perspective view of a battery supporting device.

Referring to Figs.1 and 2, a walking-type lawn mower M includes a cutter housing 1 having an opened lower surface and including a cutter contained therein, as usual. A pair of left and right front wheels 2 are suspended at a front portion of the housing 1, and a pair of left and right rear wheels 3 are suspended at a rear portion of the housing 1. A prime mover, i.e., a vertical engine 4 is mounted on the cutter housing 1 and has an output shaft which is operatively associated with the cutter rotatably carried within the cutter housing 1 and which is operatively associated with the rear wheels 3 through a transmission. An handle post 5 extending obliquely upwards and rearwards and for steering the lawn mower M mounted at the rear portion of the cutter housing 1.

As best shown in Fig.4, a substantially flat rear deck 6 inclined downwards in a rearward direction from the rear wheels 3 is formed at the rear portion of the cutter housing 1. A rectangular mowed-grass releasing port 7 is opened in a laterally one side (a right side in a direction of advance of the lawn mower) of the rear deck 6, so that the grass mowed by the cutter is released out of the cutter housing 1 through the mowed-grass port 7 to the outside, as usual. A battery mounting face 8 for detachable mounting of a battery 9 serving as a power source for an electric equipment such as a starter motor for the engine 4 is formed on the other side (a left side in a direction of advance of the lawn mower) of the rear deck 6 in parallel to the mowed-grass releasing port 7. The battery mounting face 8 is formed substantially flat, and a battery box 13 with the battery 9 contained therein is detachably mounted on the battery mounting face 8, as described hereinafter.

As shown in Figs.3 and 4, a pair of mounting bores 10, 10 comprised of a pair of elongated bores are provided at a vertical distance in the battery mounting face 8. A pair locking pieces 12₁, 12₁ of an angled U-shaped locking member 12 fixed by a machine screw 11 to an inner surface of the rear deck 6 are passed through the mounting bores 10, 10 to protrude above the battery mounting face 8. Hooks 12₂, 12₂ are formed at tip ends of the locking pieces 12, 12, so that engage rings 19, 19 connected to opposite ends of an elastomeric fastening member 16 made of a rubber can be releasably engaged with the hooks 12₂, 12₂. The locking member 12 and the elastomeric fastening member 16 cooperate to constitute a fixture 20 for the battery 9.

On the other hand, the battery 9 is contained within the battery box 13 having a cubic shape with an access port 14 opened in one end face thereof. A peripheral edge of the access port 14 in the box 13 is rimmed with a seal band 15 having an angled U-shape in section and made of a rubber, a guide groove 13₁ for guiding the elastomeric fastening member 16 is defined in an outer surface of a bottom wall of the access port 14.

A procedure for mounting the battery 9 to the battery mounting face 8 on the rear deck 6 will be described below. First, the battery 9 is accommodated into the battery box 13. In this case, the battery 9 is retained within the battery box 13, so that it is not rickety. If required, a retaining member may be interposed between the battery 9 and the battery box 13. The battery box 13 having the battery 9 contained therein is placed between the locking pieces 12₁, 12₁ of the locking member 12 with its access port 14 abutting against the battery mounting face 8 with the seal member 15 interposed therebetween. Then, while the elastomeric fastening member 16 is fitted into the guide groove 13₁ in the bottom wall of the battery box 13, if the locking rings 19, 19 of the elastomeric fastening member 16 is brought into engagement with the hooks 122, 122 of the locking member 12 astride a bottom wall of the battery box 13, the battery box 13 having the battery 9 contained therein can be firmly mounted to the battery mounting face 8 through the seal member 15 interposed therebetween, as shown in Fig.3. The seal band 15 can prevent the intrusion of rain water, dusts and the like into the battery box 13.

As shown in Fig.4, an insertion bore 21 is provided in the battery mounting face 8 adjacent the mounting bores 10, 10, and a wire harness 22 connected to the electric equipment of the engine 4 such as a starter motor (not shown) is inserted through the insertion bore 21, so that a connecting terminal 22₁ at a tip end of the wire harness 22 is exposed above the battery mounting face 8. Another connecting terminal 23₁ at a tip end of another wire harness 23 extending from the battery 9 is releasably connected to the connecting terminal 22₁. Thus, the wire harnesses 22 and 23 cannot be exposed outside the battery box 13 by positioning the insertion bore 21 within the battery box 13.

As can be seen from Fig.4, mounting hooks 25, 25 are integrally provided in a projecting manner at left and right locations on an upper edge of the rear deck 6 of the cutter housing 1, and a grass bag 26 serving as a grass collecting section is detachably and openably/closably connected to the mounting hooks 25, 25. The grass bag 26 is constructed by a skeleton frame 27 being covered detachably with the bag body 28 and the grass bag 26 can be openably and closably connected to the rear deck 6 by bringing hinge shafts 29, 29 integrally, projectingly formed on a front of the skeleton frame 27 into releasable engagement with the mounting hooks 25, 25. When the grass bag 26 is in its closed state, the substantially entire surface of the rear deck 6 is covered with the grass bag 26, so that the mowed-grass releasing port 7 and the battery mounting face 8 are hidden, and of course, the battery 9 mounted to the battery mounting face 8 is contained within the grass bag 26 along with the battery box 13. If the grass bag 26 is opened upwards about the hinge shafts 29, 29, the battery mounting face 8 is exposed to the outside, thereby enabling a maintenance of the battery 9.

A rear discharge cover 30 is openably and closably connected to an upper edge of the cutter housing 1 further above the mounting hooks 25, 25 and utilized to hold down the grass bag 26.

In Figures, reference character 31 is a mudguard depending from a lower edge of the rear portion of the cutter housing 1, and reference character 32 is a key switch for starting the engine 4 through a starter motor.

If the lawn mower M is driven by starting the engine 4 through the starter motor by turning ON the key switch 32, the grass mowed by the cutter within the cutter housing 1 is accommodated into the grass bag 26 through the mowed-grass releasing port 7. In this case, the mowed grass flows in a direction of an arrow A in Fig.2 within the grass bag 26, and is accommodated therein in this manner. Therefore, the battery box 13 mounted to the rear deck 6 cannot impede the flowing of the lowed grass. In general, even when the lowed grass is fully filled into the grass bag 26, the lowed grass is scarcely contained in an area of mounting of the battery 9, as can be seen from the flowing of the mowed grass. Thus, the area of mounting of the battery 9 is substantially a dead space and hence, the mowed-grass containing volume in the grass bag 26 cannot be decreased. By the fact that the battery 9 is contained in the grass bag 26, the battery 9 cannot be exposed to the outside, leading to an extremely respectable appearance, and the battery 9 itself cannot be exposed to wind and rain.

In addition, since the battery 9 having a relatively large weight is disposed on the rear wheel 3 which is a driving wheel, the weight of the battery can be applied to the rear wheel 3 to increase the driving force for the rear wheel 3. Further, by the fact that the battery 9 is mounted at a relatively lower position on the cutter housing 1, the gravity center of the entire lawn mower M can be lowered, leading to an enhanced working stability thereof.

By removing the grass bag 26, the maintenance of the battery 9 can be simply and easily conducted.

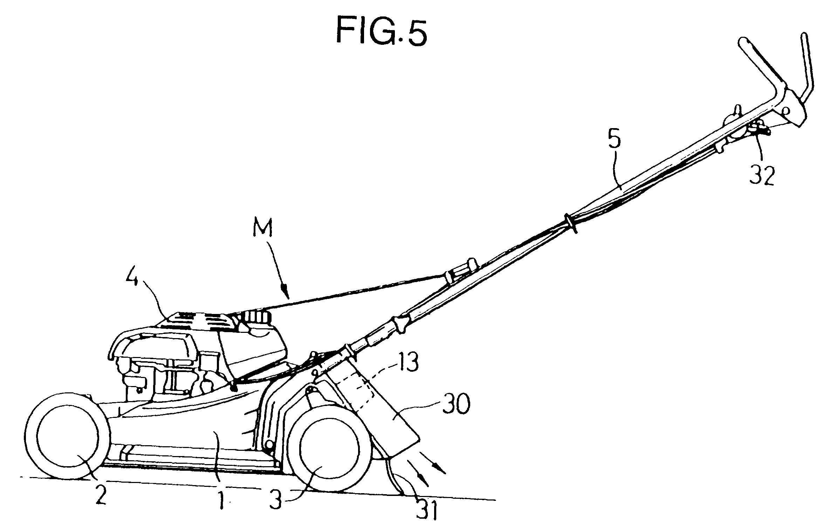

Another example of application of the above-described embodiment is shown in Fig.5. In this example of application, the rear discharge cover 30 is used as a grass collecting section. After the grass bag 26 is removed from the cutter housing 1, the rear discharge cover 30 is turned downwards and lowered to abut against the surface of the rear deck 6, thereby covering the mowed-grass releasing port 7 and the battery box 13.

With this example of application, the mowed grass released from the mowed-grass releasing port 7 is collected into the rear discharge cover 30 as the grass collecting section. The collected lowed-grass is guided rearwards and downwards by the rear discharge cover 30 and released through a discharge port in the rear discharge cover 30 to the outside.

Even in this example of application, a function and an effect similar to those in the above-described embodiment are provided.

Although the embodiment of the present invention has been described in detail, it will be understood that the present invention is not limited to the above-described embodiment, and various modifications may be made within the scope of the invention as defined by the claims.

For example, the engine has been described as being used as the prime mover in the embodiment, but in place of the engine, an electric motor may be used. In this case, the battery can be used as a power source for driving the electric motor. A solar cell panel may be disposed on the cutter housing, so that an electricity generated by the solar cell panel may be used as a power source for driving the electric motor. Yet further, in place of the rear wheel as driving wheels, driving rollers may be used.

## Claims

1. A walking-type lawn mower comprising a battery supporting device, a prime mover (4) mounted on a cutter housing (1) for driving a cutter accomodated in said cutter housing, and a grass collecting section (26; 30) detachably mounted to a rear deck (6) of the cutter housing (1) to cover a mowed-grass releasing port (7) opened in said rear deck (6), wherein said battery supporting device comprises a battery mounting face (8),
characterized in that said battery mounting face (8) is formed on said rear deck (6), and said battery supporting device further comprises a battery box (13) which is detachably mounted to said battery mounting face (8), the battery box (13) having a battery (9) accomodated therein by a fixture (20) and being covered by said grass collecting section (26; 30).

2. A walking-type lawn mower according to claim 1, wherein said battery mounting face (8) is formed on said rear deck (6) laterally in parallel to said mowed-grass releasing port (7).

3. A walking-type lawn mower according to claim 1 or 2, wherein said fixture (20) is comprised of a locking member (12) inserted in a mounting bore (10) provided in said battery mounting face (8), and an elastomeric fastening member (16) releasably locked on the locking member (12) astride said battery box (13).

4. A walking-type lawn mower according to claim 1, 2 or 3, wherein said rear deck (6) has an insertion bore (21) opened therein and covered along with said mounting bore (10) by the battery box (13), a wire harness (22, 23) connected to the battery (9) being guided through the insertion bore (21) to an inside of the cutter housing (1).

5. A walking-type lawn mower according to claim 1, 2, 3 or 4, wherein said battery (9) is disposed on rear wheels (3) which are driving wheels.

## Patentansprüche

1. Ein selbstangetriebener Rasenmäher, welcher eine Batteriehaltevorrichtung, einen auf ein Messergehäuse (1) montierten Antriebsmotor (4) zum Antreiben eines im Messergehäuse untergebrachten Messers und einen abnehmbar an einer Rückwand (6) des Messergehäuses (1) montierten Grassammelabschnitt (26; 30), zum Abdecken einer Auslassöffnung (7) für gemähtes Gras, welche in die Rückwand (6) eingebracht ist, umfasst, wobei die Batteriehaltevorrichtung eine Batterieanbringungsfläche (8) umfasst, dadurch gekennzeichnet, dass die Batterieanbringungsfläche (8) an der Rückwand (6) vorgesehen ist und dass die Batteriehaltevorrichtung weiterhin einen Batteriekasten (13) umfasst, welcher abnehmbar an der Batterieanbringungsfläche (8) angebracht ist, wobei der Batteriekasten (13) eine darin durch eine Befestigungsvorrichtung (20) untergebrachte Batterie (9) aufweist und durch den Grassammelabschnitt (26; 30) abgedeckt ist.

2. Eine Batteriehaltevorrichtung in einem selbstangetriebenen Rasenmäher nach Anspruch 1, wobei die Batterieanbringungsfläche (8) auf der Rückwand (6) seitlich parallel zu der Auslassöffnung (7) für gemähtes Gras ausgebildet ist.

3. Eine Batteriehaltevorrichtung in einem selbstangetriebenen Rasenmäher nach Anspruch 1 oder 2, wobei die Befestigungsvorrichtung (20) aus einem Verschlußelement (12), welches in eine in der Batterieanbringungsfläche (8) vorgesehenen Anbringungsbohrung (10) eingesetzt ist sowie einem elastomerischen Befestigungselement (16), welches lösbar zu beiden Seiten des Batteriekastens (13) an das Verschlußelement (12) angeschlossen ist.

4. Eine Batteriehaltevorrichtung in einem selbstangetriebenen Rasenmäher nach Anspruch 1, 2 oder 3, wobei die Rückwand (6) eine darin eingebrachte Einsetzbohrung (21) aufweist und zusammen mit der Anbringungsbohrung (10) durch den Batteriekasten (13) abgedeckt wird und einen mit der Batterie (9) verbundenen Kabelsatz (22, 23), welcher durch die Einsetzbohrung (21) zu einer Innenseite des Messergehäuses (1) geführt ist.

5. Eine Batteriehaltevorrichtung in einem selbstangetriebenen Rasenmäher nach Anspruch 1, 2, 3 oder 4, wobei die Batterie (9) an Hinterrädern (3), welche Antriebsräder sind angeordnet ist.

## Revendications

1. Tondeuse à gazon du type à conducteur accompagnant comprenant un dispositif de support de batterie, un moteur d'entraînement (4) monté sur un logement de lame (1) afin d'entraîner une lame logée dans ledit logement de lame, et une section de récupération de l'herbe (26 ; 30) montée de manière amovible sur un châssis arrière (6) du logement de lame (1) pour recouvrir un orifice d'éjection de l'herbe tondue (7) ouvert dans ledit châssis arrière (6), dans laquelle ledit dispositif de support de batterie comprend une surface de fixation de batterie (8),
caractérisée en ce que ladite surface de fixation de batterie (8) est formée sur ledit châssis arrière (6) et ledit dispositif de support de batterie comprend en outre un boîtier de batterie (13) qui est fixé de manière amovible à ladite surface de fixation de batterie (8), le boîtier de batterie (13) ayant une batterie (9) logée à l'intérieur par une fixation (20) et étant recouvert par ladite section de récupération de l'herbe (26 ; 30).

2. Dispositif de support de batterie dans une tondeuse à gazon du type à conducteur accompagnant selon la revendication 1, dans lequel ladite surface de fixation de batterie (8) est formée sur ledit châssis arrière (6) latéralement parallèle audit orifice d'éjection de l'herbe tondue (7).

3. Dispositif de support de batterie dans une tondeuse à gazon du type à conducteur accompagnant selon la revendication 1 ou 2, dans lequel ladite pièce de fixation (20) se compose d'un élément de verrouillage (12) inséré dans un alésage de fixation (10) ménagé dans ladite surface de fixation de batterie (8), et un élément d'ancrage élastomère (16) verrouillé de manière amovible sur l'élément de verrouillage (12) de part et d'autre dudit boîtier de batterie (13).

4. Dispositif de support de batterie dans une tondeuse à gazon du type à conducteur accompagnant selon la revendication 1, 2 ou 3, dans lequel ledit châssis arrière (6) possède un alésage d'insertion (21) ouvert dans celui-ci et recouvert, en même temps que ledit alésage de fixation (10), par le boîtier de batterie (13), un harnais de câbles (22, 23) relié à la batterie (9) étant guidé à travers l'alésage d'insertion (21) jusqu'à l'intérieur du logement de lame (1).

5. Dispositif de support de batterie dans une tondeuse à gazon du type à conducteur accompagnant selon la revendication 1, 2, 3 ou 4, dans lequel ladite batterie (9) est disposée sur des roues arrière (3) qui sont des roues motrices.
